# EUROPEAN PATENT SPECIFICATION

(11) **EP 0 792 575 B1**
(45) Date of publication and mention of the grant of the patent: **11.10.2000**
(21) Application number: 97101865.0
(22) Date of filing: 06.02.1997
(51) Int. Cl.: A01D 34/00, B25F 5/02

(54) **Improved string trimmer**
Verbesserter Fadenschneider
Tondeuse à fil améliorée

(30) Priority: 01.03.1996 IT VI960020 U
(43) Date of publication of application: 03.09.1997
(73) Proprietor: VALEX S.P.A., 36015 Schio (Vicenza) (IT)
(72) Inventor: Spillere, Antonio, 36030 - Villaverla (Vicenza) (IT)
(74) Representative: Forattini, Amelia

(56) References cited:
- DE-A- 4 226 903
- GB-A- 2 115 665
- GB-A- 2 155 299

## Description

The present invention relates to an improved string trimmer, of the type that includes an elongated handle which has a grip at one end and, at the opposite end, an electric motor which turns a portion of thin flexible line so as to cut the grass.

String trimmers are known in which the body of the handle, of the grip, and of the motor casing is constituted by two facing parts or halves made of molded or injected plastic, which are mutually coupled along longitudinal coupling lines.

Examples of these tools are illustrated in British patents No. 2115665 and No. 2155299.

The body formed by the two mutually opposite parts has the purpose of supporting and protecting the various mechanical and electrical components, such as the electrical wiring, the switch, and the motor.

A drawback of these conventional devices is that the two facing parts are coupled by conventional screws which must be inserted in holes of one of the parts and then screwed in threaded seats formed in studs provided on the other part.

This assembly operation entails a certain labor, which considerably affects the final cost of the tool, which otherwise would be rather low in itself.

The tightening of the screws may also unintentionally damage some internal parts, particularly the electrical wiring, reducing the safety and reliability of the tool.

Another problem that occurs in these conventional tools is constituted by the fact that after a while the line or string wears or becomes damaged and it is therefore necessary to replace it by unwinding a new portion thereof from the spool by depressing a button located at the base of its support, which is fixed to the motor shaft.

When the tool starts, the line is automatically cut to size by a blade which is fixed to the edge of a protective shield which is shaped like a circular sector, is applied to the base of the motor casing, and has a peripheral flange.

In order to anchor the blade to the shield, it is sufficient to snugly insert one end of the blade in a narrow slot formed proximate to its peripheral flange. In order to form this slot, it is necessary to provide a very thin core or male part in the corresponding mold, consequently considerably limiting the flow rate and cooling rate of the plastic material in this region, thus increasing manufacturing times and costs.

The aim of the present invention is to provide an improved string trimmer which eliminates or at least considerably reduces the drawbacks of prior art tools and is extremely cheap and safe.

This aim is achieved by a string trimmer as claimed in the appended claims.

Troublesome and dangerous screwing operations are thus avoided, achieving a considerable reduction in assembly costs and greater safety and reliability of the tool.

Preferably, the connecting and coupling members are constituted by contoured pins which are formed in one of the parts and can be inserted in complementarily shaped seats formed in the opposite part in a facing position and provided with tip expansions.

There is also a seat that has a substantially diamond-like shape in cross-section and is formed in the protective shield in order to accommodate a line cutting blade in a substantially diagonal position.

By virtue of the geometry of the seat, which is not narrow and does not have a very small size, better sliding and cooling of the plastic material during molding is achieved, with a consequent reduction in shield molding costs.

The blade has, proximate to its end edge in the coupling region, two folded flaps which are suitable to fit snugly in the acute angles of the diamond-shaped cross-section.

In this way, the blade fitting operation is extremely simplified and does not require the aid of any intermediate support or any expensive process.

To allow better comprehension of the invention, the present string trimmer model is now described by way of non-limitative example with the aid of the accompanying drawings, wherein:

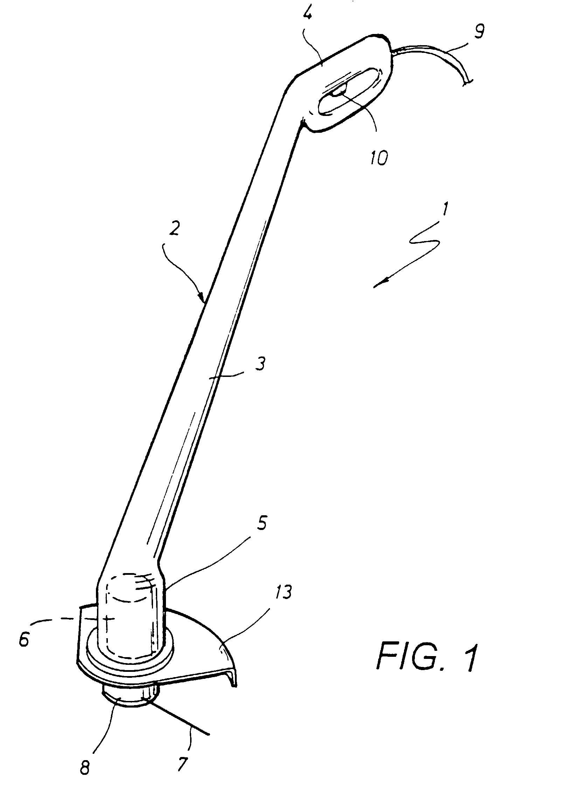

Figure 1 is a general perspective view of a string trimmer according to the invention;

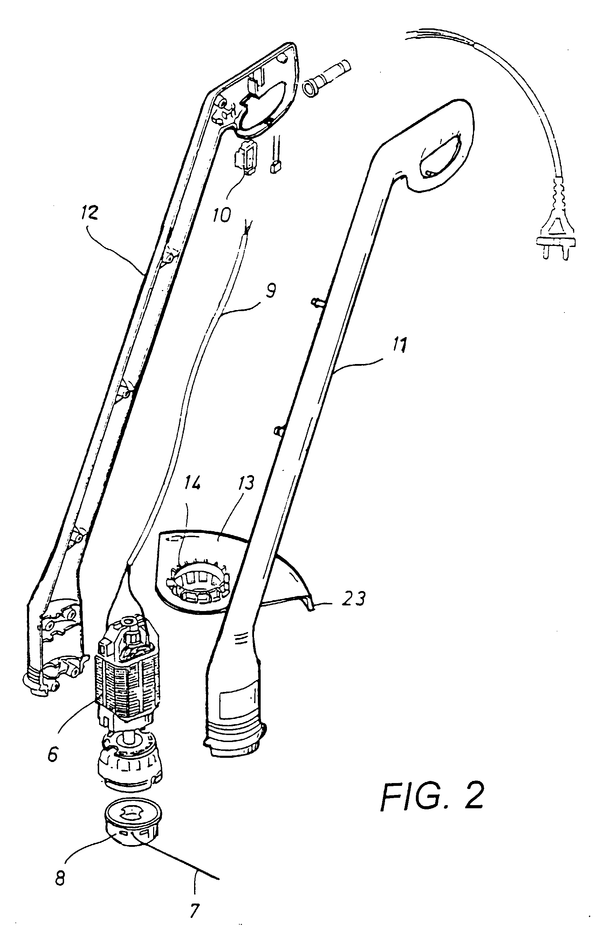

Figure 2 is an exploded perspective view of the tool of Figure 1;
Figure 3 is a sectional view of Figure 1;
Figures 4 and 5 are sectional views of two parts of Figure 3 in joined condition ;
Figure 6 is a view of the detail of Figure 3 with its parts mutually separated;
Figures 7 and 8 are views of the parts of Figure 6 ;
Figure 9 is a sectional view of a detail of Figure 1 ;
Figure 10 is a sectional view of Figure 9, with the parts separated from each other;

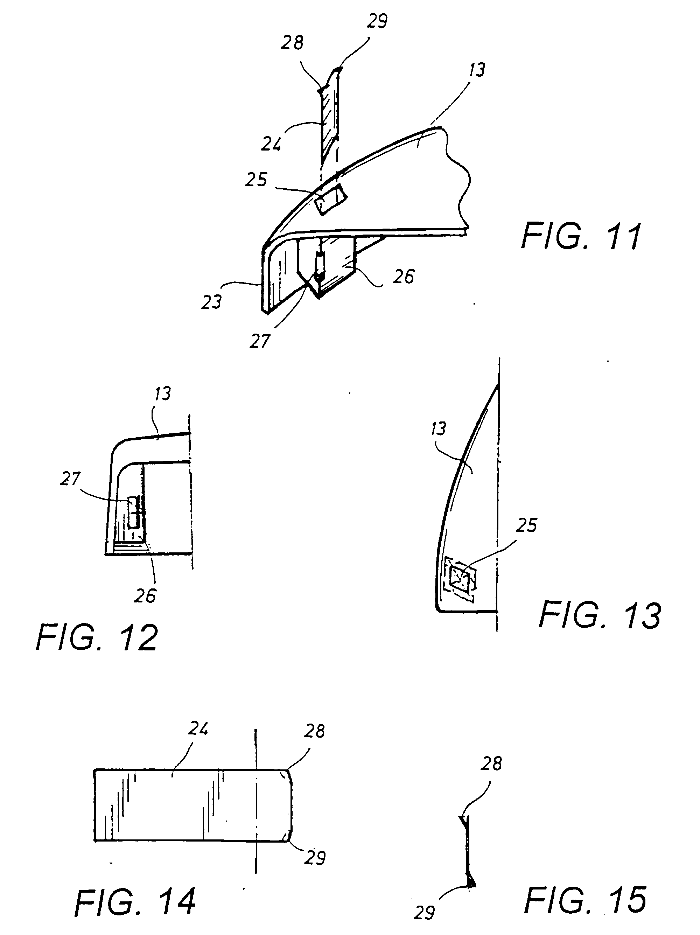

Figure 11 is a perspective view of a detail of Figure 1;
Figure 12 is a side view of the detail of Figure 11;
Figure 13 is a top view of the detail of Figure 11;
Figure 14 is a side view of a detail of Figure 11;
Figure 15 is a sectional view of the detail of Figure 14.

With reference to the above figures, the tool according to the invention, generally designated by the reference numeral 1, includes a body 2 which forms a handle 3 with an upper grip 4 and a lower casing 5 for an electric motor 6 which turns a line 7 wound on a spool 8. The motor is supplied with power by electric wiring 9 across a switch 10.

The system for anchoring the spool 8 to the motor 6 and the mechanism for releasing the line 7 are well-known to the person skilled in the art and therefore will not be described hereinafter.
The body 2 is formed by parts 11 and 12 which are shaped like mutually opposite half-shells and can be produced by injection-molding techniques using a thermoplastic material.

A protective shield 13 is detachably coupled to the lower end of the body 2, for example by means of an expanding collar 14 or by means of other detachable connecting members.

According to the invention, the parts 11 and 12 are joined along longitudinal coupling lines and are mutually stably coupled by means of suitable smooth connecting members which have no threaded parts.

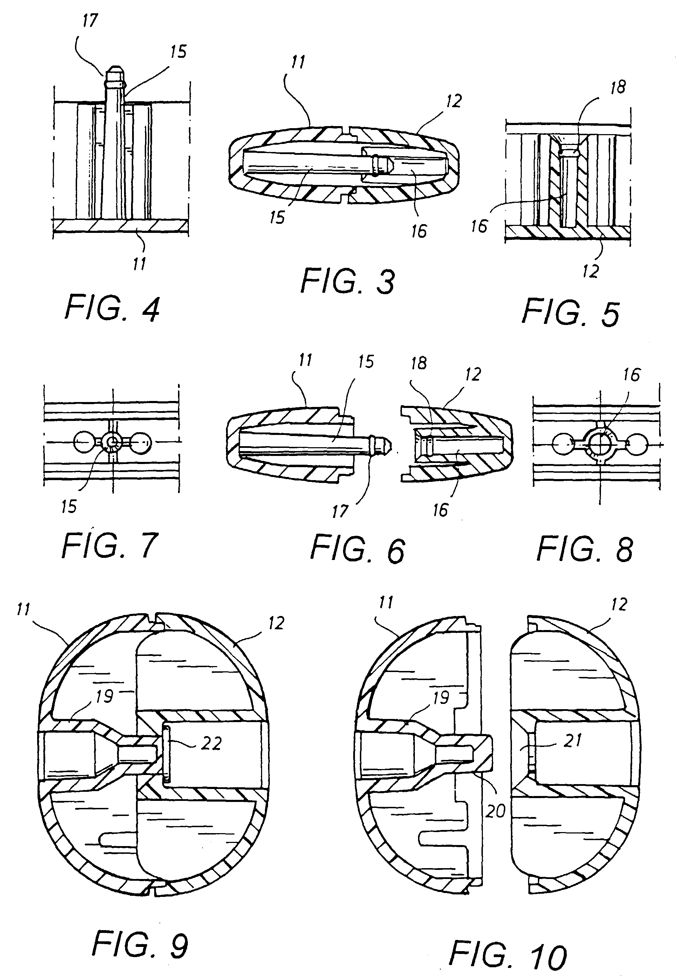

In particular, Figures 3 to 5 schematically show a first type of smooth connecting member, essentially constituted by a substantially cylindrical pin 15 which is preformed on the part 11 and can be inserted in a complementarily shaped seat 16 formed on the part 12 in a facing position.

The pin 15 may have an annular expansion 17 which may engage in an elastic snap-together fashion an annular cavity 18 formed in the seat 16.

Figures 7 and 8 schematically show, in a sectional view, a second type of smooth connecting member, essentially constituted by a hollow pin 19 with a tapering end 20 formed on the part 11, which may be inserted in a seat or flared hole 21 formed in the part 12.

The end 20 can be deformed after insertion in the respective seat 21 in order to form an annular protrusion 22 by heat, radio frequency, mechanical action, or other equivalent methods, so as to prevent the separation of the two parts 11 and 12.

It is evident that the application of these smooth connecting members requires very limited manual work and can be performed mechanically with automatic systems in very short times. It also prevents damage to delicate internal parts, such as the electric wires of the wiring.

It is also evident that in case of maintenance or replacement of the tool, it is possible to separate the two parts 11 and 12 by a strong pulling action, such as to disengage the collar 17 from the cavity 18, or by removing the pin 19 with a drill bit. The connection can be reestablished by means of expanding nails, split pins, or other connecting devices or, in extreme cases, by means of screws.

According to another aspect of the invention, the shield 13 has a rim 23 proximate to which a blade 24 is fixed; the blade protrudes inward so as to automatically cut the rotating line 4 to size.

The blade 24 is inserted in an adapted seat 25 which is formed in a prismatic compartment 26 in which the walls are substantially parallel to the rotation axis of the line 7 and the cross-section is substantially diamond-shaped.

The compartment has an opening 27 from which a sharp edge of the blade 24 protrudes; the blade can be obtained from a tempered steel band, for example UNI 7064 C67 blue tempered steel approximately 0.2 mm thick.

In order to anchor the blade in the corresponding seat 25, the corners 28 and 29 of the tip edge of the blade 24 are folded slightly outwards so as to stably and snugly fit in the plastic material of the shield when the blade 24 is inserted by forcing from above or from below along the longer diagonal of the diamond-shaped seat 25.

Since the seat 25 has a rather wide transverse cross-section, the flow of the thermoplastic material and its cooling during molding are not as slow as in prior art products, making it cheaper to produce this component.

From the above description it is evident that the tool according to the invention achieves the intended aim: in particular, the cost reduction afforded by the simplification of the operations for coupling the parts of the body and for forming the seat for the line cutting blade.

Furthermore, the elimination of screw-type coupling members eliminates the risk of damage to the wiring and increases assembly safety.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Improved string trimmer, comprising a body (2) made of substantially rigid material which forms an elongated handle (3) which has a grip (4) at one end and, at the opposite end, a casing (5) for a motor (6) which turns a portion of thin line (7) so as to cut grass, wherein said body (2) has a protective shield (13) for said line and is formed by at least two hollow parts (11, 12) which are mutually and stably coupled by connecting members (15-22), characterized in that said connecting members (15-22) are smooth and have no threaded parts and each comprises a substantially cylindrical pin (15) which protrudes from one of said parts (11) and can be inserted in a complementarily shaped seat (16) formed in a facing position in the other one of said parts (12), each pin (15; 19) having an annular protrusion (17; 22) which cooperates axially with said seat (16; 21) to mutually retain the respective parts (11, 12).

2. String trimmer according to claim 1, wherein said annular protrusion (17) is preformed on the pin (15) proximate to its free end and can be engaged elastically, in a snap-together manner, in a complementarily shaped cavity (18) formed in the facing seat (16).

3. String trimmer according to claim 1, wherein said annular protrusion (22) is formed at the free end (20) of said pin (19) after the insertion thereof in said seat (21).

4. String trimmer according to claim 3, wherein said annular protrusion (22) consists of an upsetting of material of the pin, obtained by deformation produced by heat, by radio frequency, by mechanical action, or the like.

5. String trimmer according to claim 1, wherein said shield (13) supports a blade (24) for automatically cutting said line when it rotates, said blade (24) being accommodated in a seat (25) which has a substantially diamond-shaped transverse cross-section.

6. String trimmer according to claim 5, wherein said seat (25) has inside walls which are substantially parallel to the rotation axis of the line and a lateral opening (27) from which a cutting edge of said blade (24) protrudes.

7. String trimmer according to claim 6, wherein said blade (24) is inserted in said seat (25) at a diagonal of its substantially diamond-shaped cross-section.

8. String trimmer according to claim 7, wherein said blade (24) has, along one of its longitudinal ends, slightly folded corners (28, 29) which are suitable to fit snugly and stably in the corners of the diagonal of said seat having a substantially diamond-shaped cross-section.

## Patentansprüche

1. Fadentrimmer, umfassend ein Gehäuse (2) aus einem im wesentlichen steifen Werkstoff, der eine verlängerte Handhabe (3) formt, die an einem Ende einen Griff (4) und an einem gegenüberliegenden Ende ein Gehäuse (5) für einen Motor (6) aufweist, welcher einen Bereich eines dünnen Fadens (7) so dreht, daß Gras geschnitten wird, wobei das Gehäuse (2) einen Schutzschild (13) für den Faden aufweist und von zumindest zwei Hohlelementen (11, 12) gebildet ist, die wechselseitig und dauerhaft durch Verbindungselemente (15 - 22) gekoppelt sind, dadurch gekennzeichnet, daß die Verbindungselemente (15 - 22) glatt sind und keine Gewindeteile aufweisen und jedes einen im wesentlichen zylindrischen Stift (15) umfaßt, der aus einem der Bereiche (11) herausragt und in einer Verkleidungstellung in einen komplementär geformten Sitz (16) des anderen der Elemente (12) eingesetzt werden kann, jeder Stift (15; 19) einen ringförmigen Vorsprung (17; 22) aufweist, welcher axial mit dem Sitz (16; 21) zusammenwirkt, um gegenseitig die entsprechenden Elemente (11, 12) zu halten.

2. Fadentrimmer nach Anspruch 1, dadurch gekennzeichnet, daß der ringförmige Vorsprung (17) an dem Stift (15) in der Nähe seines freien Endes vorgeformt ist und elastisch in einrastender Weise in eine komplementär in den Verkleidungssitz (16) geformte Ausnehmung (18) gekoppelt werden kann.

3. Fadentrimmer nach Anspruch 1, dadurch gekennzeichnet, daß der ringförmige Vorsprung (22) am freien Ende (20) des Stifts (19) nach dessen Einsetzen in den Sitz (21) geformt ist.

4. Fadentrimmer nach Anspruch 3, dadurch gekennzeichnet, daß der ringförmige Vorsprung (22) aus einem über Verformung durch Hitze, Hochfrequenz, mechanische Bearbeitung oder ähnlichem gestauchten Material des Stifts besteht.

5. Fadentrimmer nach Anspruch 1, dadurch gekennzeichnet, daß der Schild (13) eine Klinge (24) zum automatischen Schneiden des Fadens, während er rotiert, hält, die Klinge an einen Sitz (25) angepaßt ist, der einen im wesentlichen rombusförmigen transversalen Querschnitt aufweist.

6. Fadentrimmer nach Anspruch 5, dadurch gekennzeichnet, daß der Sitz (25) innere Wände aufweist, die im wesentlichen parallel zur Rotationsachse des Fadens und einer seitlichen Öffnung (27) sind, von der eine Schneidkante der Klinge (24) herausragt.

7. Fadentrimmer nach Anspruch 6, dadurch gekennzeichnet, daß die Klinge (24) im Sitz (25) in einer Diagonalen seines im wesentlichen rombusförmigen Querschnitts eingesetzt ist.

8. Fadentrimmer nach Anspruch 7, dadurch gekennzeichnet, daß die Klinge (24) an einer ihrer Längsenden leicht geklappte Ecken (28, 29) aufweist, die für ein gutes und stabiles Einpassen in die Ecken der Diagonale des Sitzes geeignet sind, der einen im wesentlichen rombusförmigen Querschnitt aufweist.

## Revendications

1. Taille herbe à fil amélioré, comportant un corps (2) constitué d'un matériau sensiblement rigide qui forme un manche allongé (3) ayant une poignée (4) située au niveau d'une extrémité et, au niveau de l'extrémité opposée, un boîtier (5) pour un moteur (6) qui fait tourner une partie d'un fil fin (7) de manière à couper de l'herbe, ledit corps (2) ayant un bouclier de protection (13) pour ledit fil et étant formé par au moins deux parties creuses (11, 12) qui sont reliées mutuellement et de manière stable, par des éléments de liaison (15-22), caractérisé en ce que lesdits éléments de liaison (15-22) sont lisses et n'ont pas de parties filetées et comportent chacun une broche sensiblement cylindrique (15) qui fait saillie à partir d'une première desdites parties (11) et qui peut être insérée dans un siège de forme complémentaire (16) formé dans une position de l'autre desdites parties (12) qui est en vis-à-vis, chaque broche (15 ; 19) ayant une saillie annulaire (17 ; 22) qui coopère axialement avec ledit siège (16 ; 21) pour retenir de manière mutuelle les parties respectives (11, 12).

2. Taille herbe à fil selon la revendication 1, dans lequel ladite saillie annulaire (17) est préformée sur la broche (15) à proximité de son extrémité libre et peut être mise en prise élastiquement, en les encliquetant ensemble, dans une cavité de forme complémentaire (18) formée dans le siège en regard (16).

3. Taille herbe à fil selon la revendication 1, dans lequel ladite saillie annulaire (22) est formée au niveau de l'extrémité libre de ladite broche (19) après l'insertion de celle-ci dans ledit siège (21).

4. Taille herbe à fil selon la revendication 3, dans lequel ladite saillie annulaire (22) est constituée d'un refoulement de matériau de la broche, obtenu par une déformation produite par de la chaleur, par une fréquence radio, par une action mécanique, ou analogue.

5. Taille herbe à fil selon la revendication 1, dans lequel ledit bouclier (13) supporte une lame (24) pour couper automatiquement ledit fil lorsqu'il tourne, ladite lame (24) étant reçue dans un siège (25) qui a une coupe transversale pratiquement en forme de diamant.

6. Taille herbe à fil selon la revendication 5, dans lequel ledit siège (25) a des parois intérieures qui sont pratiquement parallèles à l'axe de rotation du fil et a une ouverture latérale (27) à partir de laquelle un bord de coupe de ladite lame (24) fait saillie.

7. Taille herbe à fil selon la revendication 6, dans lequel ladite lame (24) est insérée dans ledit siège (25) au niveau d'une diagonale de sa coupe pratiquement en forme de diamant.

8. Taille herbe à fil selon la revendication 7, dans lequel ladite lame (24) a, le long d'une de ses extrémités longitudinales, des coins légèrement pliés (28, 29) qui sont adaptés pour être agencé de manière serrée et stable dans les coins de la diagonale dudit siège ayant une coupe pratiquement en forme de diamant.
